# EUROPÄISCHE PATENTANMELDUNG

(11) **EP 0 855 500 A1**
(43) Veröffentlichungstag der Anmeldung: **29.07.1998**
(21) Anmeldenummer: 98101368.3
(22) Anmeldetag: 27.01.1998
(51) Int. Cl.: F02G 1/02, F02G 3/02, F02C 3/20

(54) **Heissgasbetriebene Verbrennungskraftmaschine mit Rückgewinnung der Wärme aus dem Abgas**

(30) Priorität: 28.01.1997 DE 19702942; 18.03.1997 DE 19711246
(71) Anmelder: Ittner, Gerhard, 91448 Emskirchen (DE)
(72) Erfinder: Ittner, Gerhard, 91448 Emskirchen (DE)

(57) **Zusammenfassung**

Die Erfindung beschreibt eine Verbrennungskraftmaschine die Frischluft ansaugt,und in mehreren Stufen isotherm verdichtet. Die Luft wird hier in 5 Stufen verdichtet, 2 bar, 4 bar,8 bar,16 bar und 32 bar. Nach jeder Höherverdichtung wird über Kühler zurückgekühlt.
Das Neue ist,daß hier eine Vielstoffanlage vorliegt,die neben fast allen Festbrennstoffen auch nahezu alle Öl oder Gasbrennstoffe verarbeiten kann.
Dazu dient auch ein spezieller Festbrennstoffbrennofen, der aus keramischen Material ( Siliziumkarbit ) besteht.

Durch eine besonders hohe Prozesstemperatur liegt der Theoretische Wirkungsgrad bei ca. 65% bis ca. 85% liegt.

Somit liegt diese Verbrennungskraftmaschine im Wirkungsgrad um ca. 50% besser als der beste Dieselmotor.

Durch eine spezielle Abgasnachverbrennung wird auch eine Abgasreinheit erreicht, die auch extrem strenge zukünftige Forderungen erfüllt.

## Beschreibung

Die Erfindung betrifft eine Heißgasbetriebene Verbrennungskraftmaschine mit Rückgewinnung der Wärme aus dem Abgas.
Als Grundlage dient eine Anlage nach der Patentschrift DE-PS 863 151 die im Grundkonzept mit dieser Erfindung über-einstimmt.
So erfolgt die Verdichtung der angesaugten Luft annähernd isothermisch , die Entspannung der aufgeheizten Luft adiabat, und der Brennstoff wird vor der Kolbenmaschine bzw.in ihr in die verdichtete Luft eingebracht und verbrannt.
Außerdem wird die Wärme des Abgases auf die isotherm verdichtete Luft übertragen.
Eine solche bekannte Heißgasmaschine weißt zwar bezüglich Wirkungsgrad schon sehr gute werte auf,sie hat aber vor allem auch große Nachteile,die den modernen Anforderungen nicht entsprechen.
So verbrennt die bekannte Maschine nur Brennstoff in der verdichteten Luft,die durch die Entspannungsmaschine geht,so daß sich nur reine Kraftstoffe,wie Öle oder Gas verwenden lassen, da sonst die Entspannungsmaschine zerstört wird.

Da heute auch die Vorräte an diesen Flüssig oder Gasbrennstoffen immer knapper werden,muß das Ziel der zukünftigen Entwicklungen darin liegen, auch feste Brennstoffe mit einer solchen Maschine direkt verwerten zu können.

noch besser ist es,wenn man eine wirkliche Vielstoffmaschine hat,die neben nahezu allen festen Brennstoffen auch alle flüüsig und Gasförmigen Brennstoffe in beliebiger Zusammensetzung,also auch gemischt zusammen verbrennen kann.

Durch die hier vorgestellte Erfindung wurde dieses problem dieser Vielstofffähigkeit gelöst.
Außerdem läßt diese Maschine auch ohne zusätzliche Kosten eine besondere Abgasnachverbrennung zu,die vor allem den Rußausstoß und den CO Ausstoß auf ganz extrem niedrige Werte senken,so daß Diese Maschine Abgaswerte erfüllt,wie sie auch mit teuersten zukünftigen Abgasnachbehandlungsmethoden nicht besser erreicht werden können,wobei diese Methoden meist den Nachteil eines zusatzlichen Energieaufwands haben,diese Maschine aber führt die durch die Nachverbrennung entstehende Energie voll als Nutz-energie in den Kreislauf zurück.

Diese Maschine soll dazu im Regelfall als Vielstoffanlage gebaut werden. Dazu wird die angesaugte Frischluft,vorzugsweise in Verdichtern,die nach dem Wankelprinzip arbeiten isotherm verdichtet.
Dann wird diese verdichtete luft im Gegenstrom durch einen speziellen Brennofen geleitet,in dem Festbrennstoffe verbrannt werden können. Der Brennofen wird aus teilen gebaut,die aus keramischen Material bestehen, Nachgeschaltet nach den Brennofen ist noch ein Wärmetauscher,auch im Gegenstrom,der im Regelfall nicht aus keramischen Material besteht.
dieser Brennofen wird in einem Zusatzblatt und in den Patentansprüchen noch genauer beschrieben.

Durch die Verbrennung der Festbrennstoffe heizt sich die Keramik auf ca. 1000^{o} Cels. auf,und auch die Luft,die den Brennofen verläßt.
Diese Luft wird dann zur Entspannungsmaschine geleitet,und vor der Entspannungsmaschine,bzw in ihr wird noch flüssiger oder gasförmiger Brennstoff in die 1000^{o}Cels. heiße Luft eingebracht und verbrannt,so daß die temperatur in der sinnvollerweise gekühlten Entspannungsmaschine bis auf 2000^{o} Cels. und mehr gesteigert werden kann. Die Luft wird dann adiabat unter leistungs-gewinn entspannt,und wird dem wärmetauscher,bzw.dem Brennofen zugeleitet.
Im Unterschied zur DE-PS 863 151 ist hier der Wärmetauscher also gleichzeitig ein Brennofen für Festbrennstoffe,und er besteht im Regelfall aus mehreren hintereinandergeschalteten Teilen.
Diese Maschine kann also den Brennstoff an zwei Punkten verbrennen,auch flüssig oder Gasbrennstoff im Brennofen, sie kann aber auch als reine Öl oder gasbetriebene Maschine arbeiten,die den Brennstoff nur vor oder in der Entspannungsmaschine verbrennt.

Das große Umweltproblem bei den heutigen Maschinen liegt darin, daß zur Erzielung einer hohen Leistung meist so viel Brennstoff in der Luft verbrannt wird,daß der Sauerstoff nicht ausreicht. Das führt beim Dieselmotor zu einem erheblichen Rußausstoß,der die Luft sehr stark belastet,und bei Menschen zu Lungenkrebs führen kann.
Bei Gasmotoren ergibt sich ein hoher ausstoß an Kohlenmonoxid ,was Energieverlust und Umweltbelastung bedeutet.

Fährt man im Sinne des Umweltschutzes die Leistung zurück,um mit mehr Sauerstoffüberschuß zu arbeiten, so sinkt auch der Wirkungsgrad stark ab,von ca. 43% beim Dieselmotor auf ca. 33% beim Gasmotor.
Dieser Effekt läuft natürlich ganz entschieden dem Ziel zu einer Verringerung des CO₂ Ausstoßes entgegen,somit wird der eine Umweltgewinn,durch einen anderen erheblichen Umweltschaden erkauft.
Bedeutende Gasmotorenhersteller können bei ihren Magermix Gasmotoren nur wirkungsgrade von ca. 33% vorweisen.

Das Grundschaltbild dieser anlage bietet neben ihren Vorteilen, die die isotherme Verdichtung mit Abgaswärmenutzung schon bietet,nämlich einen theoretischen Wirkungsgrad von bis zu 85% auch noch den Vorteil einer sehr preisgünstigen Abgasnachverbrennung,und damit höchdster Abgasreinheit.

Die Anlage ist so aufgebaut,daß das Abgas entweder in einen Gegenstromwärmetauscher geleitet werden kann,der im Gegenstrom die frische Luft aufheizt,die in den Feststoffbrennofen geleitet wird,und in deren Sauerstoff dann der Brennstoff verbrennt.

Das heiße Abgas kann aber auch zu 100% direkt in den Brennofen geleitet werden,der ja auch gleichzeitig der Wärmetauscher ist.

Vor allem sind aber auch Mischungen von reinem Abgas bzw. reiner Luft möglich.
Das ist wichtig,weil man durch eine entsprechende Mischung auch der Sauerstoffgehalt der Luft steuern läßt,die zur Festbrennstoff-verbrennung dient.
Werden Festbrennstoffe z.B. zusammen mit Diesel verbrannt,dann wird man wohl im Regelfall eine gewisse Mischung wählen.

Wird in der Maschine in die verdichtete Luft nur Diesel oder Gas eingebracht und verbrannt,so wird man zur erzielung einer hohen leistung und hohen Wirkungsgrades versuchen,möglichst viel Brennstoff einzubringen.
Das führt aber wie beschrieben zu einem erheblichen Ausstoß an Ruß und Kohlenmonoxid.

Das Abgas wird ja dann auch in diesem Fall zur Wärmerückgewinnung in den Brennofen,= Wärmetauscher geleitet.

In diesem Fall zeigt sich nun der enorme Vorteil des Konzept, bzw. dieser zusätzlichen Frischluftzuführung .
Das bis ca. 1000^{o} Cels. heiße Abgas bekommt dann nämlich zusätzlichen Sauerstoff mit in den Brennofen geliefert,so daß dann dieser Dieselruß oder das Kohlenmonoxid im Brennofen mit diesem Sauerstoff oxidiert werden kann.
Der große Vorteil,die dabei entstehende Wärme wird über den Ofen direkt an das im Gegenstrom verdichtete ,bzw. geleitete Frisch-gas übertragen,also keine wärmeverluste.

Dieser Prozess erlaubt es also nicht nur mit einem erheblichen Rußausstoß aus der Entspannungsmaschine zu arbeiten,sondern er legt diesen Zustand sogar nahe,da man dann die maximale Leistung in der Entspannungsmaschine hat.
Da also auch ein hoher Anteil von Ruß sicher nachverbrannt werden kann,ist das kein Problem.
In den Brennofen kann man auch bei reinem Öl oder Gasbetrieb einen speziell Einsatz aus Keramik anbringen,der dann in glühenden Zustand durch seine größere Oberfläche sicher diese Nachverbrennug begünstigt.
Natürlich kann auch im reinen Gas oder Ölbetrieb noch zusätzlich in den Brennofen Gas oder Öl eingebracht und dort verbrannt werden,um die Gastemperatur noch mehr zu steigern.
Die Grenze liegt dann wahrscheinlich in der Materialfestigkeiz, die bei ca. 1200^{o} Cels.bei dem keramischen Material liegen dürfte.

Somit bezieht sich der Unterschied zur DE-PS 863 151 vor allem darauf,daß der Wärmetauscher gleichzeitig ein Brennofen ist,und daß er aus mehreren Teilen besteht.
Außerdem wird im Gegensatz zur DE-PS 863 151 noch die Möglichkeit keit geschAFFEN; in den Abgasstrom noch zusätzlich Sauerstoff bzw. Frischluft zuzumischen,um dann noch eine zusätzliche Verbrennung bzw. Oxidation durchführen zu können.

Auch die Nachverbrennung von Dieselruß ist eine solche Oxidation,zusätzlich ist dann auch noch die Zuführung und Verbrennung von zusätzlichem Öl oder Gas im Brennofen= Wärmetauscher möglich.

Somit ist ein wesentlicher patentrechlicher Punkt diese zusätzliche Zuführung von Sauerstoff bzw. Frischluft, in den Abgasstrom.

Diese Maschine kann natürlich auch nur mit Festbrennstoffe betrieben werden,dann wird einfach auf diese zusätzliche Zuführung von Kraftstoff in die entspannungsmaschine verzichtet, Die Abgastemperatur ist dann natürlich auch geringer,dient aber zur wirkungsgradsteigerung durch wärmerückgewinn.

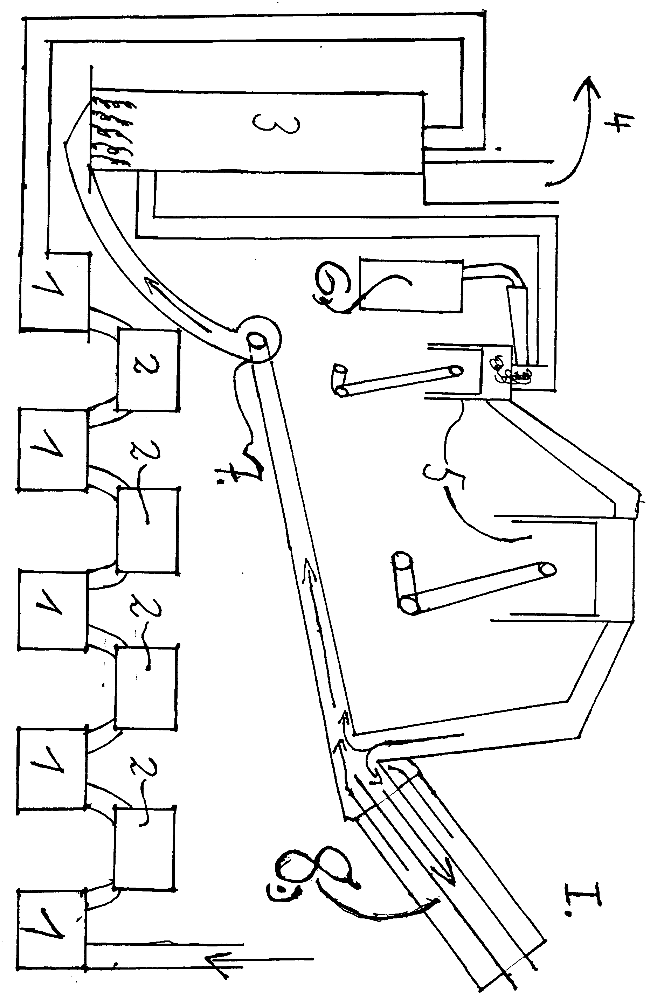

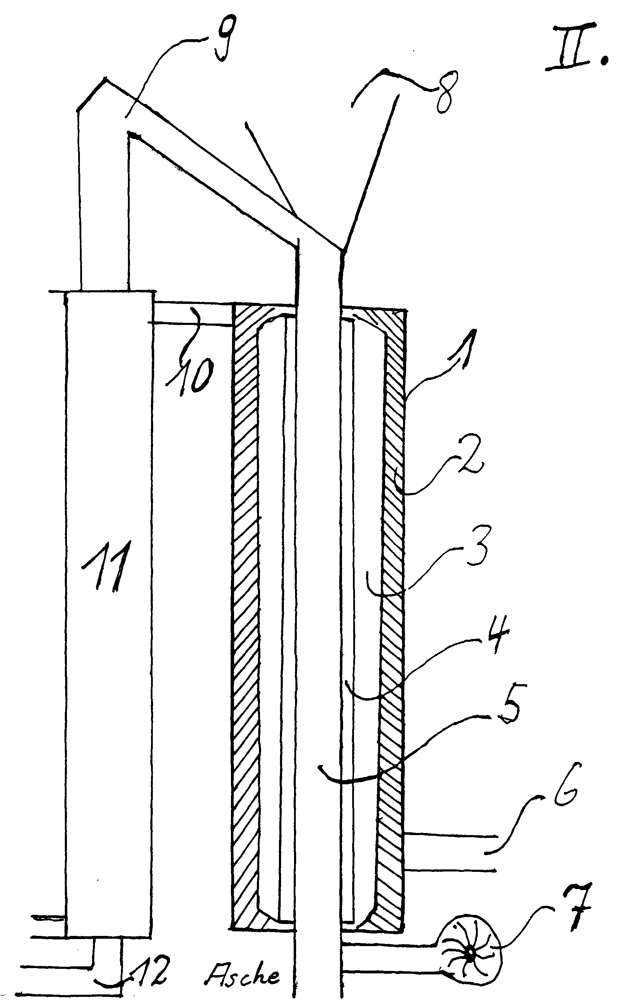

## Patentansprüche

1. Heißgasbetriebene Verbrennungskraftmaschine mit Rückgewinnung der Wärme aus dem Abgas, mit nahezu isothermer Verdichtung von angesaugter Frischluft,mit Flüssigbrennstoff oder Gas-brennstoffzuführung vor oder in der Entspannungsmaschine, mit adiabater Luftentspannung, mit Abgaswärmerückgewinnung über einen Wärmetauscher zwischen Verdichtung und flüssig, bzw . Gasverbrennung.
gekennzeichnet dadurch:
daß der Wärmetauscher gleichzeitig ein Festbrennstoffofen ist, der im Normalfall aus mehreren hintereinandergeschalteten Teilen besteht,bzw. er auch das Teil ist,in dem diec Wärme aus dem Abgasstrom an das verdichtete Frischgas übertragen wird. Der Brennofen kann zusätzlich auch als Flüssigbrennstoff oder Gasbrennstoffofen verwendet werden,
Der Brennofen kann zur Nachverbrennung des im Abgas enthaltenen Rußes und Kohlenmonoxids verwendet werden.

2. Heißgasbetriebene Verbrennungskraftmaschine nach Anspruch 1
gekennzeichnet dadurch:
daß je nach Betriebszustand in den Abgasstrom zur Unterstützung der Verbrennung bzw.Oxidation noch frische Sauerstoffreiche Luft zugemischt wird,z.B.auch dadurch,daß man im Gegenstrom eine Abgasmenge ausbringt,und die gleiche Menge Frischluft unter Gegenstromwärmeaustausch zuführt.

3. Heißgasbetriebene Verbrennungskraftmaschine nach Anspruch 1.
gekennzeichnet dadurch:
daß ein Brennofen verwendet wird,der aus stehenden Metallröhren besteht,in deren Innern sich mit Rippen versehene keramikröhren befinden,in deren Innern die Verbrennung erfolgt, und das verdichtete Frischgas im Gegenstrom zum Brenngasstrom geführt wird.
Die Keramikröhren werden oben mit Brennmaterial beschickt und unten wird die Asche entnommen und die Frischluft,bzw das zurückgeführte Abgas zugeführt.

4. Heißgasbetriebene Verbrennungskraftmaschine nach Anspruch 1.
gekennzeichnet dadurch:
daß die nach dem stehenden Brennofen (Wärmetauscher) geschalteten Nachwärmetauscher auch aus keramik bestehen können.

5. Heißgasbetriebene verbrennungskraftmaschine nach Anspruch 1.
gekennzeichnet dadurch:
daß die für die isotherme Verdichtung verwendeten Verdichter nach dem Prinzip des Wankelmotors arbeiten wobei jede Wankelscheibe zwei Kammern hat,und jede Kammer im Zweitakt luft verdichtet.

6. Heißgasbetriebene verbrennungskraftmaschine nach Anspruch 1.
gekennzeichnet dadurch:
daß die Röhren des Brennofens anstelle nebeneinander auch in einem Kreis angeordnet sein können,wobei der nachgeschaltete Wärmetauscher innerhalb oder außerhalb des Kreises sein kann. und der Gasstrom auch in einem zentralen Nachwärmetauscher zusammengeführt werden kann.

7. Heißgasbetriebene Verbrennungskraftmaschine nach Anspruch 1.
gekennzeichnetdadurch:
daß die stehenden Metallröhren,( Öfen,Wärmetauscher) nicht nur senkrecht,sondern auch mehr oder weniger schräg stehen können.

8. Heißgasbetriebene Verbrennungskraftmaschine nach Anspruch 1.
gekennzeichnet dadurch:
daß die isotherm verdichtete Frischluft außer durch innere Verbrennung und außer durch äußeren Abgaswärmeaustausch auch noch zusätzlich durch äußere (Vor) Erhitzung zusätzlich erwärmt wird.

9. Heißgasbetriebene Verbrennungskraftmaschine nach Ansdpruch 1.
gekennzeichnet dadurch:
daß anstelle der Wankelverdichter oder anderer Kolbenverdichter auch Turbinen verwendet werden können zur isothermen Verdichtung oder daß die adiabate Entspannung auch mit Turbinen durchgeführt werden kann,bzw.beliebige Zusammenstellung solcher Komponenten.
Der Prozess,bzw, die neuerung beschränkt sich also nur auf diese mögliche zweistufige Brennstoffzuführung und eine zusätzliche Sauerstoffzuführung in den Abgasstrom zum Zwecke einer Abgasnachbehandlung,bzw. zur zusätzlichen Brennstoffzuführung.
